# EUROPÄISCHE PATENTSCHRIFT

(11) **EP 1 585 308 B1**
(45) Veröffentlichungstag und Bekanntmachung des Hinweises auf die Patenterteilung: **02.05.2007**
(21) Anmeldenummer: 04101370.7
(22) Anmeldetag: 02.04.2004
(51) Int. Cl.: H04N 1/03, H04N 1/191, G01T 1/29

(54) **Vorrichtung zum Auslesen von in einer Phosphorschicht gespeicherten Röntgeninformation**
Device for reading radiographic information from a storage phosphor plate
Appareil pour lire des informations radiographiques d'un panneau luminescent d'enregistrement

(43) Veröffentlichungstag der Anmeldung: 12.10.2005
(73) Patentinhaber: Agfa-Gevaert HealthCare GmbH, 51373 Leverkusen (DE)
(72) Erfinder: Melzer, Volker, 81671, München (DE); Bommer, Christian, 81379, München (DE); Hölzl, Johannes, 85630, Neukeferloh (DE); De Felice, Armando, 85656, Buch am Buchrain (DE); von Rücker, Sibylle, 82166, Gräfelfing (DE)

(56) Entgegenhaltungen:
- EP-A- 0 479 153
- EP-A- 0 963 101
- EP-A- 1 227 653
- EP-A- 1 378 766

## Beschreibung

Die Erfindung betrifft eine Vorrichtung zum Auslesen von in einer Phosphorschicht gespeicherter Röntgeninformation gemäß dem Oberbegriff von Anspruch 1.

Röntgeninformation kann in sogenannten Speicherphosphoren gespeichert werden, wobei die durch ein Objekt, beispielsweise einen Patienten, hindurchtretende Röntgenstrahlung als latentes Bild in einer Phosphorschicht gespeichert wird. Zum Auslesen des latenten Bildes wird die Phosphorschicht mit Stimulationsstrahlung bestrahlt und dabei zur Aussendung von Emissionsstrahlung angeregt. Die Emissionsstrahlung, deren Intensität dem gespeicherten Bild entspricht, wird von einem optischen Detektor erfasst und in elektrische Signale umgewandelt. Die elektrischen Signale werden nach Bedarf weiterverarbeitet und schließlich für eine Auswertung, insbesondere zu medizinisch-diagnostischen Zwecken, bereitgestellt, indem sie an einem entsprechenden Ausgabegerät, wie z. B. einem Monitor oder Drucker, ausgegeben werden.

Aus der europäischen Patentanmeldung EP 1 378 766 A1 ist eine Vorrichtung bekannt, bei der eine Ausleseeinrichtung mittels Kegelschrauben an einem Träger gelagert ist, welcher während des Auslesens zusammen mit der Ausleseeinrichtung über die Phosphorschicht bewegt wird. Hierbei kann es in bestimmten Situationen, beispielsweise bei Erschütterungen, Temperaturschwankungen oder einer Verkantung des Trägers während seiner Bewegung, zu einer Beeinträchtigung der Qualität der aus der Phosphorschicht ausgelesenen Röntgeninformation kommen.

Es ist Aufgabe der Erfindung, eine Vorrichtung der eingangs genannten Art anzugeben, welche eine möglichst hohe Qualität der aus der Phosphorschicht ausgelesenen Röntgeninformation gewährleistet.

Diese Aufgabe wird gemäß Anspruch 1 dadurch gelöst, dass mindestens eine Komponente der Ausleseeinrichtung über mindestens ein erstes Lager, welches einen translatorischen Freiheitsgrad in einer ersten Richtung aufweist, am Träger gelagert ist, wodurch eine Bewegung der Komponente relativ zum Träger in der ersten Richtung ermöglicht wird, und das erste Lager eine Kugel umfasst, welche in einer Vertiefung des Trägers und in einer in die Komponente eingebrachten Nut, die als Führung dient, liegt, wobei die Komponente mittels einer Feder gegen die Kugel vorgespannt ist.

Die Erfindung basiert auf dem Gedanken, anstelle der Ausleseeinrichtung als Ganzes eine oder mehrere Komponenten der Ausleseeinrichtung am Träger zu lagern. Die Lagerung der einzelnen Komponenten am Träger erfolgt hierbei jeweils über Lager mit einem translatorischen Freiheitsgrad. Die Komponenten der Ausleseeinrichtung sind daher in Richtung dieses translatorischen Freiheitsgrades innerhalb eines bestimmten Bewegungsbereichs beweglich, wodurch Erschütterungen, Längenänderungen aufgrund von Temperaturschwankungen sowie etwaige Verkantungen des Trägers und daraus resultierende Verspannungen besser abgefangen bzw. vermieden werden können als bei der aus dem Stand der Technik bekannten Vorrichtung. Auf diese Weise wird eine hohe Qualität beim Auslesen der in der Phosphorschicht gespeicherten Röntgeninformation gewährleistet.

In einer bevorzugten Ausgestaltung der Erfindung ist vorgesehen, dass mindestens zwei Komponenten der Ausleseeinrichtung über jeweils mindestens ein erstes Lager, welches jeweils einen translatorischen Freiheitsgrad in einer ersten Richtung aufweist, einzeln am Träger gelagert sind. Durch die einzelne, d. h. voneinander entkoppelte, Lagerung der Komponenten wird erreicht, dass sich die einzelnen Komponenten voneinander unabhängig relativ zum Träger bewegen können. Hierdurch wird vermieden, dass sich Längenänderungen, Verspannungen oder Erschütterungen in einzelnen Komponenten gegenseitig beeinflussen und gegebenenfalls verstärken. Damit wird eine besonders hohe Qualität des ausgelesenen Röntgenbildes gewährleistet.

Bei dieser Ausgestaltung sind mindestens zwei der folgenden Komponenten der Ausleseeinrichtung einzeln und unabhängig voneinander in erfindungsgemäßer Weise gelagert:
- eine Stimulationsstrahlungsquelle zur Erzeugung von Stimulationsstrahlung;
- eine erste optische Einrichtung zur Fokussierung der Stimulationsstrahlung auf die Phosphorschicht;
- ein Detektor zum Erfassen der durch die Stimulationsstrahlung in der Phosphorschicht angeregten Emissionsstrahlung;
- eine zweite optische Einrichtung zur Fokussierung der von der Phosphorschicht ausgehenden Emissionsstrahlung auf den Detektor;
- eine Filtereinrichtung zwischen Phosphorschicht und Detektor, welche für Emissionsstrahlung im Wesentlichen durchlässig und für Stimulationsstrahlung im Wesentlichen undurchlässig ist.

In einer weiteren bevorzugten Ausgestaltung ist vorgesehen, dass die Komponente der Ausleseeinrichtung eine längliche Form in einer Längsrichtung aufweist, welche im Wesentlichen parallel zur ersten Richtung verläuft. Hierdurch wird ein besonders hoher Gewinn an Bildqualität erzielt, da Verspannungen in Längsrichtung der Komponente, die im Falle einer thermischen Ausdehnung in Längsrichtung besonders hoch sind, vermieden oder zumindest vermindert werden.

In einer weiteren Ausgestaltung der Erfindung weist die Komponente der Ausleseeinrichtung ein erstes Ende auf und ist im Bereich ihres ersten Endes über das erste Lager am Träger gelagert. Vorzugsweise ist im Bereich des ersten Lagers ein drittes Lager mit einem translatorischen Freiheitsgrad in der ersten Richtung und einem weiteren translatorischen Freiheitsgrad in einer zweiten Richtung angeordnet, wobei die zweite Richtung vorzugsweise senkrecht zur ersten Richtung verläuft. Durch das zusätzliche dritte Lager wird eine Verkippung der Komponente um ihre Längsrichtung im Bereich des ersten Endes verhindert, ohne weitere rotatorische Freiheitsgrade einzuschränken.

In einer Weiterbildung der Erfindung ist vorgesehen, dass die Komponente der Ausleseeinrichtung ein zweites Ende aufweist und im Bereich ihres zweiten Endes über ein zweites Lager am Träger gelagert ist, welches keinen translatorischen Freiheitsgrad aufweist. Hierdurch wird erreicht, dass die Komponente lediglich an einem - ersten - Ende translatorisch beweglich gelagert ist, während am anderen - zweiten - Ende keine translatorische Bewegung möglich ist. Hierdurch wird eine thermische Ausdehnung der Komponente ermöglicht und gleichzeitig die Anfälligkeit für mechanische Erschütterungen vermindert.

Es ist auch vorteilhaft, im Bereich des zweiten Lagers ein viertes Lager mit einem translatorischen Freiheitsgrad in der ersten Richtung und einem weiteren translatorischen Freiheitsgrad in einer zweiten Richtung anzuordnen. Durch das vierte Lager wird eine Verkippung der Komponente um ihre Längsrichtung im Bereich des zweiten Endes verhindert, ohne weitere rotatorische Freiheitsgrade einzuschränken.

Erfindungsgemäß sind die jeweiligen Lager als Punktlager ausgestaltet. Die einzelnen Lager umfassen hierbei jeweils eine Kugel, durch welche in Verbindung mit dem entsprechend ausgestalteten Träger bzw. der entsprechend ausgestalteten Komponente die unterschiedlichen Freiheitsgrade der jeweiligen Komponenten realisiert werden. Durch die Verwendung von Kugeln als Punktlager wird gleichzeitig der Vorteil erzielt, dass rotatorische Freiheitsgrade senkrecht zur Längsrichtung der jeweiligen Komponente im Allgemeinen erhalten bleiben und erst durch das oben beschriebene dritte Lager und/oder vierte Lager um einen rotatorischen Freiheitsgrad, nämlich die Verkippung um die Längsrichtung der Komponente, vermindert werden.

In einer weiteren bevorzugten Ausgestaltung der Erfindung ist vorgesehen, dass der Träger zwei Seitenteile umfasst, an welchen mindestens eine Komponente der Ausleseeinrichtung gelagert ist. Die Seitenteile weisen hierzu entsprechende Auflagen auf, beispielsweise in Form von Vorsprüngen oder Vertiefungen. Die beiden Seitenteile sind durch ein oder mehrere Verbindungselemente miteinander verbunden. Vorzugsweise sind hierzu drei Verbindungselemente vorgesehen, um eine möglichst stabile Verbindung beider Seitenteile bei gleichzeitig geringer Anzahl von Verbindungselementen zu gewährleisten. Die Verbindungselemente sind vorzugsweise aus Kunststoff oder aus einem durch Fasern, insbesondere Glas- oder Kohlefasern, verstärkten Kunststoff hergestellt. Auf diese Weise kann ein Träger mit hoher Stabilität bei gleichzeitig geringem Gewicht realisiert werden.

Vorzugsweise weisen die Verbindungselemente einen niedrigeren thermischen Ausdehnungskoeffizienten auf als die Komponenten der Ausleseeinrichtung. Dadurch verhält sich der Träger im Vergleich zu den einzelnen Komponenten der Ausleseeinrichtung im Falle von Temperaturschwankungen relativ starr, d.h. thermische Längenänderungen des Trägers sind gegenüber denen der einzelnen Komponenten vernachlässigbar.

Vorzugsweise haben die Verbindungselemente eine längliche Form und ein die längliche Form stabilisierendes Querschnittsprofil. Das Querschnittsprofil ist hierbei vorzugsweise v-, mehreck- oder kreisförmig. Hierdurch wird bei hoher Material- und Gewichtsersparnis eine hohe Steifigkeit des Trägers erzielt.

Eine weitere bevorzugte Ausgestaltung der Erfindung sieht vor, dass mindestens eine Komponente der Ausleseeinrichtung aus zwei oder mehreren Teilkomponenten mit unterschiedlichen thermischen Ausdehnungskoeffizienten zusammengesetzt ist und die Teilkomponenten derart angeordnet und miteinander verbunden sind, dass sich infolge von Temperaturänderungen auftretende Biegekräfte zwischen jeweils zwei Teilkomponenten dieser Komponente gegenseitig aufheben, wodurch eine Verbiegung der Komponente vermieden wird. Die Komponente der Ausleseeinrichtung ist demnach so aufgebaut, dass etwaige "Bimetall-Effekte" im Bereich der Kontaktfläche von zwei Teilkomponenten unterschiedlichen Materials verhindert werden.

Bei einer Variante dieser Ausführung können die Teilkomponenten der Komponente mechanisch entkoppelt sein. Dies wird beispielsweise durch Verwendung einer elastischen Verbindung, z.B. einer elastischen Kleberschicht, zwischen den Teilkomponenten erreicht, durch welche eine Bewegung der Teilkomponenten relativ zueinander - zumindest innerhalb bestimmter Grenzen - ermöglicht wird. Durch diese Beweglichkeit der Teilkomponenten relativ zueinander wird das Auftreten von Spannungen und gegebenenfalls Biegekräften in der Komponente aufgrund unterschiedlicher thermischer Ausdehnungskoeffizienten auf einfache Weise vermieden.

Die erfindungsgemäße Vorrichtung weist vorzugsweise eine Aufnahmeeinrichtung auf, an welcher der Träger gelagert ist und welche den Träger über die Phosphorschicht bewegen kann. Da die einzelnen Komponenten der Ausleseeinrichtung bereits herstellungsseitig in den Träger eingesetzt und justiert werden können, kann der Träger zusammen mit den Komponenten mit relativ geringem Montage- und Justieraufwand in die Aufnahmeeinrichtung eingesetzt werden. Eine erneute Justage der Komponenten beim oder nach dem Einsetzten des Trägers in die Aufnahmeeinrichtung kann dann in der Regel entfallen. Auf diese Weise wird eine einfache Tauschbarkeit der kompletten Ausleseeinrichtung zu Reparatur- und Servicezwecken erreicht.

Vorzugsweise ist der Träger an der Aufnahmeeinrichtung über mindestens ein fünftes Lager gelagert, welches einen translatorischen Freiheitsgrad in der ersten Richtung aufweist, so dass eine Bewegung des Trägers in der ersten Richtung ermöglicht wird. Auf diese Weise wird sichergestellt, dass sich auch der Träger relativ zur Aufnahmeeinrichtung in der ersten Richtung bewegen, insbesondere ausdehnen, kann. Hierdurch werden Spannungen infolge von Erschütterungen oder thermischer Ausdehnung des Trägers vermieden.

Die Erfindung wird nachfolgend anhand von Figuren näher erläutert.

Es zeigen:
- Fig. 1: eine Seitenansicht der erfindungsgemäßen Vorrichtung;
- Fig. 2: eine Vorderansicht einer ersten Variante der erfindungsgemäßen Vorrichtung;
- Fig. 3: eine Vorderansicht einer zweiten Variante der erfindungsgemäßen Vorrichtung;
- Fig. 4: eine Ansicht einer der in Fig. 2 und 3 gezeigten Komponente in Blickrichtung B;
- Fig. 5: die beiden Enden der in Fig. 4 gezeigten Komponente in vergrößerter Darstellung;
- Fig. 6: die beiden Enden einer Variante der in Fig. 4 gezeigten Komponente in vergrößerter Darstellung; und
- Fig. 7: einen Ausschnitt aus einem Seitenteil des Trägers.

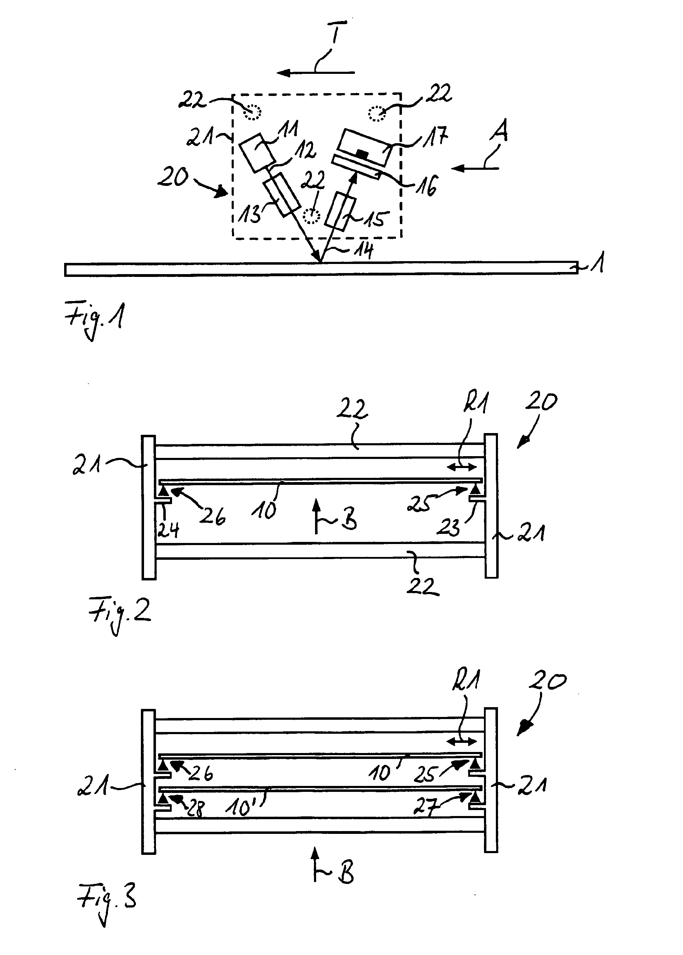

Fig. 1 zeigt eine Seitenansicht der erfindungsgemäßen Vorrichtung zum Auslesen der in einer Phosphorschicht 1 gespeicherten Röntgeninformation. Die Vorrichtung weist eine Ausleseeinrichtung auf, welche im Wesentlichen folgende Komponenten umfasst:
- eine Stimulationsstrahlungsquelle 11 zur Erzeugung von Stimulationsstrahlung 12;
- eine erste optische Einrichtung 13 zur Fokussierung der Stimulationsstrahlung 12 auf die Phosphorschicht 1;
- einen Detektor 17 zur Erfassung von Emissionsstrahlung 14, welche durch die Stimulationsstrahlung 12 in der Phosphorschicht 1 angeregt wird;
- eine zweite optische Einrichtung 15 zur Fokussierung der Emissionsstrahlung 14 auf den Detektor 17; sowie
- eine Filtereinrichtung 16, welche für Emissionsstrahlung 14 im Wesentlichen durchlässig und für Stimulationsstrahlung 12 im Wesentlichen undurchlässig ist.

Vorzugsweise ist die Ausleseeinrichtung als sogenannter Zeilensensor ausgebildet, wobei die Stimulationsstrahlungsquelle 11 als Linienlichtquelle ausgebildet ist, welche beispielsweise eine Vielzahl von in einer Zeile senkrecht zur Figurenebene angeordneten Laserdioden umfasst. Der Detektor 17 weist in diesem Fall eine Vielzahl von ebenfalls in einer Zeile senkrecht zur Figurenebene angeordneten strahlungsempfindlichen Flächen auf, beispielsweise in Form eines sogenannten CCD-Arrays.

Bei der ersten optischen Einrichtung 13 handelt es sich um eine oder mehrere, senkrecht zur Figurenebene verlaufende Zylinderlinsen, welche die Stimulationsstrahlung 12 in Figurenebene auf die Phosphorschicht 1 fokussieren. Entsprechendes gilt für die zweite optische Einrichtung 15, wobei diese zusätzlich ein ebenfalls senkrecht zur Figurenebene verlaufendes Linsenarray aufweist, welches eine Fokussierung der von der Phosphorschicht 1 ausgehenden Emissionsstrahlung 14 auf die einzelnen lichtempfindlichen Elemente des Detektors 17 senkrecht zur Figurenebene bewirkt.

Die genannten Komponenten der Ausleseeinrichtung sind an einem Träger 20 angebracht, welcher seinerseits mit einer nicht dargestellten Aufnahmeeinrichtung gekoppelt ist und durch diese in Transportrichtung T über die Phosphorschicht 1 geführt werden kann. Hierbei werden durch die mitgeführte Ausleseeinrichtung sukzessive unterschiedliche Bereiche der Phosphorschicht 1 ausgelesen, wobei ein in der Phosphorschicht 1 gespeichertes Röntgenbild ausgelesen wird.

Der Träger 20 umfasst im Wesentlichen zwei Seitenteile 21, von denen in der hier gewählten Seitenansicht lediglich eines zu erkennen ist. Zur stabilen mechanischen Verbindung der Seitenteile 21 sind drei Verbindungselemente 22, vorzugsweise Rohre aus glas- oder kohlefaserverstärktem Kunststoff, vorgesehen. Aus Anschaulichkeitsgründen sind das Seitenteil 21 sowie die Verbindungselemente 22 gestrichelt bzw. gepunktet dargestellt.

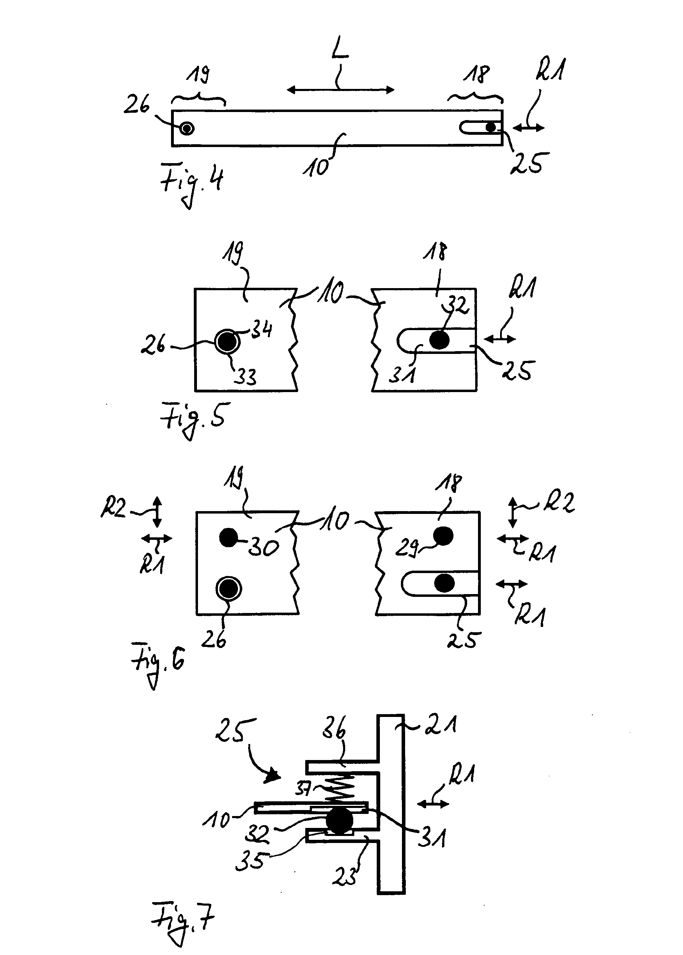

Fig. 2 zeigt eine Vorderansicht einer ersten Variante der in Fig. 1 dargestellten Vorrichtung in Blickrichtung A. Zur besseren Veranschaulichung des der Erfindung zugrundeliegenden Prinzips ist hier lediglich eine stark schematisierte Komponente 10 der in Fig. 1 gezeigten Ausleseeinrichtung dargestellt. Die nachfolgenden Ausführungen bezüglich dieser Komponente 10 gelten entsprechend für eine oder mehrere der in Fig. 1 dargestellten Komponenten 11, 13, 15, 16 bzw. 17 der Ausleseeinrichtung.

In dieser Ansicht sind beide Seitenteile 21 des Trägers 20 sowie deren Verbindung mittels Verbindungselementen 22 gut erkennbar. Die Seitenteile 21 weisen im gezeigten Ausführungsbeispiel Vorsprünge 23 und 24 auf, an welchen die Komponente 10 der Ausleseeinrichtung mittels eines ersten Lagers 25 und eines zweiten Lagers 26 gelagert ist.

Erfindungsgemäß ist das erste Lager 25 derart ausgestaltet, dass dieses einen translatorischen Freiheitsgrad in einer ersten Richtung R1 aufweist, wodurch eine Bewegung der Komponente 10 relativ zum Träger 20 in der ersten Richtung R1 ermöglicht wird. Das andere Ende der Komponente 10 ist über ein zweites Lager 26 am Vorsprung 24 des Seitenteils 21 gelagert, wobei das zweite Lager 26 keinen translatorischen Freiheitsgrad in der ersten Richtung R1 aufweist. Durch diese Lagerung der Komponente 10 über das erste Lager 25 und zweite Lager 26 wird erreicht, dass die Komponente 10 bei einfacher und sicherer Arretierung im zweiten Lager 26 gleichzeitig bei Auftreten von Erschütterungen oder Längenänderungen aufgrund von Temperaturschwankungen in der ersten Richtung R1 ausweichen kann. Hierdurch werden unerwünschte Spannungen in der Komponente 10 der Ausleseeinrichtung verhindert oder zumindest reduziert.

Fig. 3 zeigt eine Vorderansicht einer zweiten Variante der erfindungsgemäßen Vorrichtung, bei welcher zwei Komponenten 10 und 10' am Träger 20 einzeln, d.h. unabhängig voneinander, gelagert sind. Jede der Komponenten 10 und 10' ist hierbei jeweils über ein erstes Lager 25 bzw. 27 sowie ein zweites Lager 26 bzw. 28 an den Seitenteilen 21 des Trägers 20 gelagert. Die beiden ersten Lager 25 und 27 sind erfindungsgemäß so ausgestaltet, dass sie einen translatorischen Freiheitsgrad in der ersten Richtung R1 aufweisen und damit eine Bewegung der jeweiligen Komponenten 10 bzw. 10' relativ zum Träger 20 in der ersten Richtung R1 erlauben. Dadurch, dass die beiden Komponenten 10 und 10' jeweils einzeln und unabhängig voneinander am Träger 20 gelagert sind, können auch deren Bewegungen in der ersten Richtung R1 unabhängig voneinander erfolgen. Die Komponenten 10 und 10' sind damit voneinander entkoppelt, so dass etwaige Verspannungen aufgrund unterschiedlicher thermischer Ausdehnungskoeffizienten vermieden werden.

Im dargestellten Beispiel befinden sich die beiden ersten Lager 25 bzw. 27 jeweils an demselben (in Figur 3: am rechten) Ende der jeweiligen Komponenten 10 bzw. 10'. Bei bestimmten Anwendungen kann es von Vorteil sein, wenn das erste Lager 25 der einen Komponente 10 und das erste Lager 27 der anderen Komponente 10' an den gegenüberliegenden Enden (in Figur 3: am rechten bzw. am linken Ende) der jeweiligen Komponenten 10 bzw. 10' angeordnet ist.

Fig. 4 zeigt eine Ansicht der in den Fig. 2 und 3 gezeigten Komponente 10 in Blickrichtung B. Wie zu erkennen ist, hat die Komponente 10 eine längliche Form, die sich parallel zu einer Längsrichtung L erstreckt. Das erste Lager 25 liegt im Bereich eines ersten Endes 18 der Komponente 10, während das zweite Lager 26 im Bereich eines zweiten Endes 19 der Komponente 10 liegt. Wie der Darstellung außerdem zu entnehmen ist, verlaufen die Längsrichtung L, entlang welcher sich die längliche Form der Komponente 10 erstreckt, und die erste Richtung R1, in welcher sich die Komponente 10 bewegen kann, parallel zueinander. Dies ist besonders vorteilhaft, um Verspannungen aufgrund von Längenänderungen infolge von Temperaturschwankungen zu vermeiden. Das erste und zweite Lager 25 bzw. 26 sind in der hier gewählten Darstellung nur schematisch angedeutet. Ihr Aufbau wird nachfolgend im Zusammenhang mit der Fig. 5 näher erläutert.

Fig. 5 zeigt die beiden Enden 18 und 19 jeweils als vergrößerten Ausschnitt der in der Fig. 4 gezeigten Komponente 10. Das im Bereich des ersten Endes 18 der Komponente 10 angeordnete erste Lager 25 umfasst im Wesentlichen eine in die Komponente 10 eingebrachte Nut 31 sowie eine Kugel 32, welche in der Nut 31 in der ersten Richtung R1 beweglich ist, beispielsweise durch Rollen und/oder Gleiten. Im Bereich des zweiten Endes 19 der Komponente ist eine kreisförmige Aussparung 33 vorgesehen, in welche eine Kugel 34 teilweise eingesenkt werden kann. Durch eine entsprechende Aussparung in der Auflage, insbesondere dem Vorsprung 24, am Seitenteil 21 (siehe Fig. 2) wird erreicht, dass das zweite Lager 26 keine translatorischen Freiheitsgrade aufweist. Darüber hinaus bleiben durch das hier gezeigte zweite Lager 26 rotatorische Freiheitsgrade der Komponente 10 um eine parallel zur ersten Richtung R1 verlaufende Rotationsachse sowie um eine in Figurenebene senkrecht dazu verlaufende Achse erhalten.

Fig. 6 zeigt die beiden Enden 18 und 19 einer Variante der in Fig. 4 gezeigten Komponente 10 in vergrößerter Darstellung. Im Bereich des ersten Endes 18 der Komponente 10 ist zusätzlich zum ersten Lager 25 ein drittes Lager 29 vorgesehen, welches sowohl einen translatorischen Freiheitsgrad in der ersten Richtung R1 als auch einen translatorischen Freiheitsgrad in einer zweiten Richtung R2 aufweist. Das dritte Lager 29 lässt sich auf einfache Weise durch eine Kugel realisieren, auf welcher das erste Ende 18 der Komponente 10 aufliegt und welche in einer kreisförmigen Vertiefung in der Auflage, insbesondere einen Vorsprung 23, des Seitenteils 21 des Trägers 20 (siehe Fig. 2) teilweise eingesenkt ist. Durch das dritte Lager 29 im Bereich des ersten Lagers 25 wird eine Verkippung des ersten Endes 18 der Komponente 10 um eine parallel zur Längsrichtung L der Komponente 10 verlaufende Rotationsachse verhindert. Auf diese Weise können Spannungen in der Komponente 10 bei gleichzeitig hoher Kippstabilität verhindert bzw. reduziert werden.

Auch im Bereich des zweiten Endes 19 der Komponente 10 kann zusätzlich zum zweiten Lager 26 ein viertes Lager 30 mit zwei translatorischen Freiheitsgraden in der ersten und zweiten Richtung R1 bzw. R2 vorgesehen sein. Hierdurch wird die Kippstabilität bezüglich einer parallel zur Längsrichtung L verlaufenden Rotationsachse mit besonders hoher Zuverlässigkeit gewährleistet.

Fig. 7 zeigt einen Ausschnitt aus dem rechten Seitenteil 21 des Trägers mit dem erfindungsgemäßen ersten Lager 25. Die Komponente 10 ist über eine Kugel 32 am Vorsprung 23 des Seitenteils 21 gelagert. Die Kugel 32 liegt hierbei in einer in den Vorsprung eingebrachten Vertiefung 35. Gleichzeitig liegt die Kugel 32 in der in die Komponente 10 eingebrachten Nut 31, die als Führung dient. Die Komponente 10 ist mittels einer Feder 37 gegen die Kugel 32 vorgespannt, um ein unerwünschtes Herausspringen der Kugel und/oder der Komponente 10 aus dem Lager zu vermeiden. Die Feder 37 ist hierzu vorzugsweise an einem weiteren Vorsprung 36 des Seitenteils 21 angebracht.

Das zweite, dritte und vierte Lager 26, 29 bzw. 30 lassen sich auf entsprechende Weise realisieren, wobei beim zweiten Lager 26 die Führungsnut 31 durch eine runde Vertiefung, ähnlich der Vertiefung 35, zu ersetzen ist und bei dem dritten und vierten Lager 29 bzw. 33 die optische Komponente 10 im Allgemeinen keine Vertiefung bzw. Führungsnut aufweist.

## Patentansprüche

1. Vorrichtung zum Auslesen von in einer Phosphorschicht (1) gespeicherter Röntgeninformation mit
- einer Ausleseeinrichtung zum Bestrahlen der Phosphorschicht (1) mit Stimulationsstrahlung (12), welche die Phosphorschicht (1) zum Aussenden von Emissionsstrahlung (14) in Abhängigkeit von der in der Phosphorschicht (1) enthaltenen Röntgeninformation anregen kann, und zum Erfassen der in der Phosphorschicht (1) angeregten Emissionsstrahlung (14) und
- einem Träger (20), an welchem die Ausleseeinrichtung gelagert ist,
**dadurch gekennzeichnet, dass**
- mindestens eine Komponente (10, 10', 11, 13, 15, 16, 17) der Ausleseeinrichtung über mindestens ein erstes Lager (25, 27), welches einen translatorischen Freiheitsgrad in einer ersten Richtung (R1) aufweist, am Träger (20) gelagert ist, wodurch eine Bewegung der Komponente (10, 10', 11, 13, 15, 16, 17) relativ zum Träger (20) in der ersten Richtung (R1) ermöglicht wird, und
- das erste Lager (25, 27) eine Kugel (32) umfasst, welche in einer Vertiefung (35) des Trägers (20) und in einer in die Komponente°(10, 10', 11, 13, 15, 16, 17) eingebrachten Nut (31), die als Führung dient, liegt, wobei die Komponente (10, 10', 11, 13, 15, 16, 17) mittels einer Feder (37) gegen die Kugel (32) vorgespannt ist.

2. Vorrichtung nach Anspruch 1, wobei mindestens zwei Komponenten (10, 10', 11, 13, 15, 16, 17) der Ausleseeinrichtung über jeweils mindestens ein erstes Lager (25, 27), welches jeweils einen translatorischen Freiheitsgrad in einer ersten Richtung (R1) aufweist, einzeln am Träger (20) gelagert sind, wodurch eine voneinander unabhängige Bewegung der Komponenten (10, 10', 11, 13, 15, 16, 17) relativ zum Träger (20) in der jeweiligen ersten Richtung (R1) ermöglicht wird.

3. Vorrichtung nach Anspruch 1 oder 2, wobei die Komponente (10, 10', 11, 13, 15, 16, 17) eine sich in einer Längsrichtung (L) erstreckende längliche Form aufweist, wobei die Längsrichtung (L) im Wesentlichen parallel zur ersten Richtung (R1) verläuft.

4. Vorrichtung nach einem der vorangehenden Ansprüche, wobei die Komponente (10,10',11, 13, 15, 16, 17) der Ausleseeinrichtung ein erstes Ende (18) aufweist und im Bereich ihres ersten Endes (18) über das erste Lager (25, 27) am Träger (20) gelagert ist.

5. Vorrichtung nach Anspruch 5, wobei die Komponente (10, 10', 11, 13, 15, 16, 17) der Ausleseeinrichtung ein zweites Ende (19) aufweist und im Bereich ihres zweiten Endes (19) über ein zweites Lager (26) am Träger (20) gelagert ist, welches keinen translatorischen Freiheitsgrad, vorzugsweise keinen translatorischen Freiheitsgrad in der ersten Richtung (R1), aufweist.

6. Vorrichtung nach Anspruch 4 oder 5, wobei im Bereich des ersten Lagers (25) ein drittes Lager (29) mit einem translatorischen Freiheitsgrad in der ersten Richtung (R1) und einem translatorischen Freiheitsgrad in einer zweiten Richtung (R2) angeordnet ist.

7. Vorrichtung nach Anspruch 6, wobei im Bereich des zweiten Lagers (26) ein viertes Lager (30) mit einem translatorischen Freiheitsgrad in der ersten Richtung (R1) und einem translatorischen Freiheitsgrad in einer zweiten Richtung (R2) angeordnet ist.

8. Vorrichtung nach einem der vorangehenden Ansprüche, wobei der Träger (20) zwei Seitenteile (21) umfasst, an welchen mindestens eine Komponente (10, 10', 11, 13, 15, 16, 17) der Ausleseeinrichtung gelagert ist.

9. Vorrichtung nach Anspruch 8, wobei der Träger (20) ein oder mehrere, insbesondere drei, Verbindungselemente (22) umfasst, welche die beiden Seitenteile (21) miteinander verbinden.

10. Vorrichtung nach Anspruch 9, wobei die Verbindungselemente (22) aus Kunststoff oder einem durch Fasern, insbesondere Glas- oder Kohlefasern, verstärkten Kunststoff bestehen.

11. Vorrichtung nach Anspruch 9 oder 10, wobei die Verbindungselemente (22) einen niedrigeren thermischen Ausdehnungskoeffizienten aufweisen als die Komponenten (10, 10', 11, 13, 15, 16, 17) der Ausleseeinrichtung.

12. Vorrichtung nach einem der Ansprüche 9 bis 11, wobei die Verbindungselemente (22) eine längliche Form und ein die längliche Form stabilisierendes Querschnittsprofil, vorzugsweise ein v-förmiges, mehreckförmiges oder kreisförmiges Querschnittsprofil, aufweisen.

13. Vorrichtung nach einem der vorangehenden Ansprüche, wobei mindestens eine Komponente (10, 10', 11, 13, 15, 16, 17) der Ausleseeinrichtung aus zwei oder mehreren Teilkomponenten mit unterschiedlichen thermischen Ausdehnungskoeffizienten zusammengesetzt ist und die Teilkomponenten derart angeordnet und miteinander verbunden sind, dass sich infolge von Temperaturänderungen auftretende Biegekräfte zwischen jeweils zwei Teilkomponenten der Komponente (10, 10', 11, 13, 15, 16, 17) gegenseitig hemmen, wodurch eine Verbiegung der Komponente (10, 10', 11, 13, 15, 16, 17) vermieden wird.

14. Vorrichtung nach einem der vorangehenden Ansprüche mit einer Aufnahmeeinrichtung, an welcher der Träger (20) gelagert ist und welche den Träger (20) über die Phosphorschicht (1) bewegen kann.

15. Vorrichtung nach Anspruch 14, wobei der Träger (20) an der Aufnahmeeinrichtung über mindestens ein fünftes Lager gelagert ist, welches einen translatorischen Freiheitsgrad in der ersten Richtung (R1) aufweist, wodurch eine Bewegung des Trägers (20) relativ zur Aufnahmeeinrichtung in der ersten Richtung (R1) ermöglicht wird.

## Claims

1. Device for reading out X-ray information stored in a phosphor layer (1) comprising
- a read-out unit for irradiating the phosphor layer (1) with stimulation radiation (12), which can stimulate the phosphor layer (1) into emitting emission radiation (14) dependent on the X-ray information contained in the phosphor layer (1), and for capturing the emission radiation (14) stimulated in the phosphor layer (1) and
- a base (20), onto which the read-out unit is mounted,
**characterised in that**
- at least one component (10, 10', 11, 13, 15, 16, 17) of the read-out unit is mounted onto the base (20) over at least one first bearing (25, 27) which exhibits a translatory degree of freedom in a first direction (R1), as a result of which a movement of the component (10, 10', 11, 13, 15, 16, 17) in relation to the base (20) in the first direction (R1) is made possible, and
- **in that** the first bearing (25, 27) comprises a ball (32) lying in an indentation (35) of the base (20) and in a groove (31) made into the component°(10, 10', 11, 13, 15, 16, 17) and serving as a guide, the component (10, 10', 11, 13, 15, 16, 17) being biased against the ball (32) by means of a spring (37).

2. Device according to claim 1, wherein at least two components (10, 10', 11, 13, 15, 16, 17) of the read-out unit are mounted individually onto the base (20) over at least a first bearing (25, 27) respectively which respectively has a translatory degree of freedom in a first direction (R1), as a result of which the components (10, 10', 11, 13, 15, 16, 17) are allowed to move independently of one another in relation to the base (20) in the respective first direction (R1).

3. Device according to claim 1 or 2, wherein the component (10, 10', 11, 13, 15, 16, 17) has an elongated form extending in a lengthwise direction (L), said lengthwise direction (L) running essentially parallel to the first direction (R1).

4. Device according to any of the preceding claims, wherein the component (10, 10', 11, 13, 15, 16, 17) of the read-out unit exhibits a first end (18) and is mounted onto the base (20) over the first bearing (25, 27) in the area of its first end (18).

5. Device according to claim 5, wherein the component (10, 10', 11, 13, 15, 16, 17) of the read-out unit exhibits a second end (19) and is mounted onto the base (20) over a second bearing (26), which has no translatory degree of freedom, preferably no translatory degree of freedom in the first direction (R1), in the area of its second end (19).

6. Device according to claim 4 or 5, wherein a third bearing (29) with a translatory degree of freedom in the first direction (R1) and a translatory degree of freedom in a second direction (R2) is arranged in the area of said first bearing (25).

7. Device according to claim 6, wherein a fourth bearing (30) with a translatory degree of freedom in the first direction (R1) and a translatory degree of freedom in a second direction (R2) is arranged in the area of said second bearing (26).

8. Device according to any of the preceding claims, wherein the base (20) comprises two side sections (21) onto which at least one component (10, 10', 11, 13, 15, 16, 17) of the read-out unit is mounted.

9. Device according to claim 8, wherein the base (20) comprises one or several, in particular three, connecting elements (22) connecting both side sections (21) one to the other.

10. Device according to claim 9, wherein the connecting elements (22) are made from synthetic material or from a fibre reinforced, in particular a glass fibre or carbon fibre reinforced, plastic.

11. Device according to claim 9 or 10, wherein the connecting elements (22) exhibit a lower thermal expansion coefficient than the components (10, 10', 11, 13, 15, 16, 17) of the read-out unit.

12. Device according to any of the claims 9 to 11, wherein the connecting elements (22) exhibit an elongated form and a cross-sectional profile which stabilises the elongated form, preferably a V-shaped, polygonal or circular cross-sectional profile.

13. Device according to any of the preceding claims, wherein at least one component (10, 10', 11, 13, 15, 16, 17) of the read-out unit is made up of two or more partial components with different thermal expansion coefficients and the partial components are arranged and interconnected in such a way that any bending forces arising between two respective partial components of the component (10, 10', 11, 13, 15, 16, 17) as a result of temperature fluctuations inhibit one another, as a result of which bending of the component (10, 10', 11, 13, 15, 16, 17) is avoided.

14. Device according to any of the preceding claims comprising a holding unit, onto which the base (20) is mounted and which can move the base (20) over the phosphor layer (1).

15. Device according to claim 14, wherein the base (20) is mounted onto the holding unit over at least a fifth bearing which exhibits a translatory degree of freedom in the first direction (R1), as a result of which a movement of the base (20) in relation to the holding unit in the first direction (R1) is made possible.

## Revendications

1. Dispositif destiné à la lecture d'une information radiographique mémorisée dans une couche à base de phosphore (1), comportant :
- un dispositif de lecture pour l'exposition de la couche à base de phosphore (1) à un rayonnement de stimulation (12), qui peut stimuler la couche à base de phosphore (1) à émettre un rayonnement d'émission (14) en fonction de l'information radiographique contenue dans la couche à base de phosphore (1), et pour la détection du rayonnement d'émission (14) stimulé dans la couche à base de phosphore (1), et
- un support (20), sur lequel est monté le dispositif de lecture,
**caractérisé en ce que**
- au moins un composant (10, 10', 11, 13, 15, 16, 17) du dispositif de lecture est monté sur le support (20) par l'intermédiaire d'au moins un premier palier (25, 27), qui possède un degré de liberté en translation dans une première direction (R1), moyen par lequel le composant (10, 10', 11, 13, 15, 16, 17) peut se déplacer dans la première direction (R1) par rapport au support (20), et
- **en ce que** le premier palier (25, 27) comporte une bille (32), qui est située dans un renfoncement (35) du support (20) et dans une rainure (31) servant de guidage, pratiquée dans le composant (10, 10', 11, 13, 15, 16, 17), le composant (10, 10', 11, 13, 15, 16, 17) étant précontraint par rapport à la bille (32) au moyen d'un ressort (37).

2. Dispositif selon la revendication 1, dans lequel au moins deux composants (10, 10', 11, 13, 15, 16, 17) du dispositif de lecture sont montés individuellement sur le support (20) par l'intermédiaire d'au moins un premier palier (25, 27), qui possède respectivement un degré de liberté en translation dans une première direction (R1), moyen par lequel les composants (10, 10', 11, 13, 15, 16, 17) peuvent se déplacer indépendamment les uns des autres dans la première direction (R1) par rapport au support (20).

3. Dispositif selon la revendication 1 ou 2, dans lequel le composant (10, 10', 11, 13, 15, 16, 17) possède une forme oblongue s'étendant dans une direction longitudinale (L), la direction longitudinale (L) étant sensiblement parallèle à la première direction (R1).

4. Dispositif selon l'une des revendications précédentes, dans lequel le composant (10, 10', 11, 13, 15, 16, 17) du dispositif de lecture comporte une première extrémité (18), et est monté sur le support (20) dans la zone de sa première extrémité (18) par l'intermédiaire du premier palier (25, 27).

5. Dispositif selon la revendication 5, dans lequel le composant (10, 10', 11, 13, 15, 16, 17) du dispositif de lecture comporte une deuxième extrémité (19), et est monté sur le support (20) dans la zone de sa deuxième extrémité (19) par l'intermédiaire d'un deuxième palier (26), qui ne possède pas de degré de liberté en translation, de préférence pas de degré de liberté en translation dans la première direction (R1).

6. Dispositif selon la revendication 4 ou 5, dans lequel un troisième palier (29) avec un degré de liberté en translation dans la première direction (R1), et un degré de liberté en translation dans une deuxième direction (R2), est agencé dans la zone du premier palier (25).

7. Dispositif selon la revendication 6, dans lequel un quatrième palier (30) avec un degré de liberté en translation dans la première direction (R1), et un degré de liberté en translation dans une deuxième direction (R2), est agencé dans la zone du deuxième palier (26).

8. Dispositif selon l'une des revendications précédentes, dans lequel le support (20) comporte deux parties latérales (21), sur lesquelles est monté au moins un composant (10, 10', 11, 13, 15, 16, 17) du dispositif de lecture.

9. Dispositif selon la revendication 8, dans lequel le support (20) comporte un ou plusieurs éléments de liaison (22), notamment trois, qui relient les deux parties latérales (21) entre elles.

10. Dispositif selon la revendication 9, dans lequel les éléments de liaison (22) sont en matière plastique ou en une matière plastique renforcée par des fibres, notamment par des fibres de verre ou de carbone.

11. Dispositif selon la revendication 9 ou 10, dans lequel les éléments de liaison (22) ont un coefficient de dilatation thermique plus faible que les composants (10, 10', 11, 13, 15, 16, 17) du dispositif de lecture.

12. Dispositif selon l'une des revendications 9 à 11, dans lequel les éléments de liaison (22) ont une forme oblongue, et un profil de section transversale stabilisant la forme oblongue, de préférence un profil de section transversale en forme de V, polygonale ou circulaire.

13. Dispositif selon l'une des revendications précédentes, dans lequel au moins un composant (10, 10', 11, 13, 15, 16, 17) du dispositif de lecture est constitué de deux ou de plusieurs composants partiels ayant différents coefficients de dilatation thermique, et dans lequel les composants partiels sont agencés et reliés entre eux de telle sorte que des forces de flexion, intervenant en raison de variations de température entre deux composants partiels respectifs des composants (10, 10',11, 13, 15, 16, 17), se compensent mutuellement, ce qui permet d'éviter une déformation des composants (10, 10', 11, 13, 15, 16, 17).

14. Dispositif selon l'une des revendications précédentes, comportant un système de réception sur lequel est monté le support (20), et qui peut déplacer le support (20) au-dessus de la couche à base de phosphore (1).

15. Dispositif selon la revendication 14, dans lequel le support (20) est monté sur le système de réception par l'intermédiaire d'au moins un cinquième palier, qui possède un degré de liberté en translation dans la première direction (R1), moyen par lequel un déplacement du support (20) par rapport au système de réception est possible dans la première direction (R1).
